# EUROPÄISCHE PATENTSCHRIFT

(11) **EP 0 373 457 B1**
(45) Veröffentlichungstag und Bekanntmachung des Hinweises auf die Patenterteilung: **06.04.1994**
(21) Anmeldenummer: 89122268.9
(22) Anmeldetag: 02.12.1989
(51) Int. Cl.: C08G 18/32, C08K 5/34, C08K 5/53

(54) **Verfahren zur Herstellung von Polyurethanschaumstoffen**
Process for the preparation of polyurethane foams
Procédé pour la préparation de mousses de polyuréthane

(30) Priorität: 16.12.1988 DE 3842384
(43) Veröffentlichungstag der Anmeldung: 20.06.1990
(73) Patentinhaber: BAYER AG, 51368 Leverkusen (DE)
(72) Erfinder: Haas, Peter, Dr., D-5657 Haan 1 (DE); Hettel, Hans, Dr., D-5064 Rösrath-Forsbach (DE); Jacobs, Gundolf, Dr., D-5060 Bergisch Gladbach 1 (DE)

(56) Entgegenhaltungen:
- EP-A- 0 120 253
- EP-A- 0 367 714
- WO-A-88/09351
- DE-A- 2 325 648
- GB-A- 2 163 762
- GB-A- 2 177 406
- US-A- 3 664 975
- US-A- 4 010 124
- US-A- 4 268 633

## Beschreibung

Seit langem wird versucht, Polyurethanschaumstoffe flammwidriger einzustellen. Diese Problematik wird auch deshalb ständig bearbeitet, weil die Anforderungen bezüglich einer Entflammbarkeit laufend angehoben werden.

So fand in jüngster Zeit in Großbritanien die Consumer Protection 1988/Nr. 1324 mit ihren Furniture and Furnishings Fire Safety Regulations starke Beachtung, da dort nur noch Schaumstoffe mit hoher Entflammbarkeitsresistenz verwendet werden dürfen. Als Maß hierfür dient eine 17 g schwere Holzkrippe, die mittels einer bestimmten Menge Isopropanol versetzt und auf einer Sesselform, die mit dem Schaumstoff ausgerüstet ist, entzündet wird. Die Flammen müssen innerhalb von 10 Minuten völlig verlöschen, der Masseverlust darf nicht mehr als 60 g betragen.

Dieser Test stellt an die Schaumstoffe besonders strenge Anforderungen bezüglich ihrer Entzündungsresistenz. In jüngster Zeit wird zudem versucht, die Verwendung von Phosphorsäureestern bzw. Halogenalkylphosphorsäureestern als Flammschutzmittel einzuschränken.

Ein weiterer Weg wurde durch die Verwendung von Melamin als Flammschutzmittel beschritten. In diesem Zusammenhang seien die DE-OS 2 809 084, GB-PS 2 177 406, DE-OS-2 815 554, DE-OS 3 530 519, DE-OS 2 815 554 sowie GB-PS 2 094 315 erwähnt.

Es hat sich auch gezeigt, daß Melamin, auch bei Mitverwendung von z.B. Trischlorethylphosphat oder anderen Phosphaten als zusätzliches Flammschutzmittel, dem Polyurethanschaumstoff im Dauergebrauch noch keinen ausreichenden Flammschutz verleiht. Mit dem erfindungsgemäßen Verfahren wird dieser Nachteil überwunden.

Gegenstand der Erfindung ist ein Verfahren zur Herstellung von Polyurethanschaumstoffen durch Umsetzung von 1) Polyisocyanaten mit 2) mindestens zwei gegenüber Isocyanaten aktive Wasserstoffatome aufweisenden Verbindungen vom Molekulargewicht 400 bis 10.000 in Gegenwart von 3) Wasser und/oder organischen Treibmitteln, 4) Katalysatoren, 5) Melamin als Flammschutzmittel und 6) weiteren Flammschutzmitteln und gegebenenfalls in Gegenwart von 7) Verbindungen mit mindestens zwei gegenüber Isocyanaten reaktionsfähigen Wasserstoffatomen und einem Molekulargewicht von 32 bis 399 sowie 8) an sich bekannten oberflächenaktiven Zusatzstoffen und weiteren, an sich bekannten Hilfsmitteln, dadurch gekennzeichnet, daß als weitere Flammschutzmittel 6) Phosphonsäureester der allgemeinen Formeln 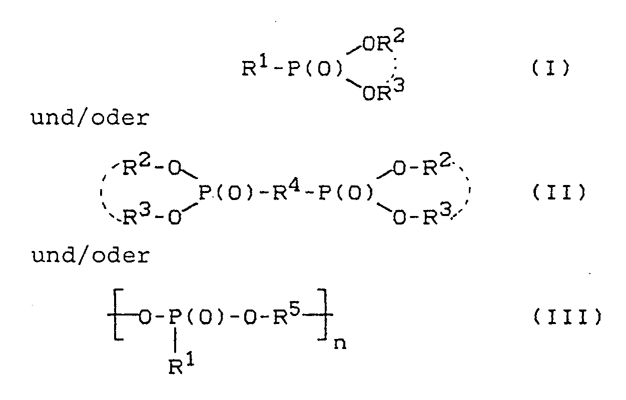
in denen
- R¹, R² und R³: gleich oder verschieden sind und einen gesättigten oder ungesättigten C₁-C₆-Alkylrest, einen C₅-C₁₂-Cycloalkylrest, einen C₇-C₁₅-Aralkylrest oder einen C₆-C₁₂-Arylrest, wobei R² und R³ zusammen eine C₂-C₄-Alkylengruppe darstellen können
- R₄: eine C₁-C₆-Alkylengruppe, C₅-C₁₂-Cycloalkylengruppe, C₇-C₁₅-Aralkylengruppe oder eine C₆-C₁₂-Arylengruppe,
- C₅: eine C₂-C₆-Alkylengruppe, C₅-C₁₂-Cycloalkylengruppe, C₇-C₁₅-Aralkylengruppe oder eine C₆-C₁₂-Arylengruppe
und
- n: eine ganze Zahl von 1 bis 100
bedeuten, und Melamin 5) mit einer Korngröße von 5 - 90 µm, vorzugsweise 5 - 50 µm, verwendet wird.

Vorzugsweise werden erfindungsgemäß als Komponente 2) polymermodifizierte Polypolyole und/oder Polyole mit überwiegend primären Hydroxylgruppen verwendet.

Bevorzugte Ausführungsformen des erfindungsgemäßen Verfahrens sind, daß
- als polymermodifizierte Polyole Polyharnstoffdispersionen in Polyetherpolyolen verwendet werden,
- als polymermodifizierte Polyole Alkanolaminaddukte von Diisocyanaten in Polyetherpolyolen verwendet werden,
- als polymermodifizierte Polyole gepfropfte Polyether polyole, die durch Polymerisation von Acrylnitril und/oder Styrol in Polyether polyolen erhalten wurden, verwendet werden,
- als Flammschutzmittel 6) Dimethylmethylphosphonat verwendet wird, und daß
- als Flammschutzmittel 6)Dimethylethylphosphonat oder Dimethylphenylphosphonat verwendet wird.

Für die Herstellung der Polyurethanschaumstoffe werden als Ausgangskomponenten eingesetzt:
1. Aliphatische, cycloaliphatische, araliphatische, aromatische und heterocyclische Polyisocyanate, wie sie z.B. von W. Siefken in Justus Liebigs Annalen der Chemie, 562, Seiten 75 bis 136, beschrieben werden, beispielsweise solche der Formel

   Q(NCO)ₙ

   in der
   - n: = 2 - 4, vorzugsweise 2,
   und
   - Q: einen aliphatischen Kohlenwasserstoffrest mit 2 - 18, vorzugsweise 6 - 10 C-Atomen,
   einen cycloaliphatischen Kohlenwasserstoffrest mit 4 -15, vorzugsweise 5 - 10 C-Atomen,
   einen aromatischen Kohlenwasserstoffrest mit 6 -15, vorzugsweise 6 - 13 C-Atomen,
   oder einen araliphatischen Kohlenwasserstoffrest mit 8 -15, vorzugsweise 8 - 13 C-Atomen,
   bedeuten, z.B. solche Polyisocyanate, wie sie in der DE-OS 2 832 253, Seiten 10 - 11, beschrieben werden.

   Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.
2. Ausgangskomponenten sind a) ferner die an sich bekannten "polymermodifizierten" Polyole. Bevorzugt sind Dispersionen von Polymeren enthaltenden höhermolekularen Hydroxylverbindungen, die durch Umsetzung von Mono- und/ oder Polyisocyanaten mit primäre und/oder sekundäre Aminogruppen aufweisenden Polyaminen und/oder Hydrazinen und/oder Hydraziden und/oder Alkanolaminen in einer 1 bis 8 primäre und/oder sekundäre Hydroxylgruppen aufweisenden Verbindung mit einem Molekulargewicht von 400 bis 10.000 hergestellt worden sind.
   Derartige Dispersionen von Polymeren enthaltenden höhermolekularen Hydroxylverbindungen sind z. B. aus DE-AS 25 19 004, DE-OS 25 50 796, DE-OS 25 50 797, DE-OS 25 50 860, DE-OS 25 50 833, DE-OS 25 50 862, DE-OS 26 38 759, DE-OS 26 39 254, US-PS 43 74 209, EP-A 00 79 115 und US-PS 4 381 351 bekannt.
   In Frage kommen ferner Dispersionen von Reaktionsprodukten von Polyisocyanaten und Alkanolaminen in Polyethern (vgl. z.B. DE-OS 3 103 757) und Dispersionen von Homo- oder Copolymerisaten von ungesättigten Monomeren wie Styrol oder Acrylnitril in Polyethern (sog. "Polymer-Polyole").
   b) Die alleinige Verwendung von "aktiven" höhermolekularen Hydroxylverbindungen, d.h. von solchen, die überwiegend primäre OH-Gruppen aufweisen und die keine dispergierten höhermolekularen Anteile enthalten, ist grundsätzlich erfindungsgemäß auch möglich. Derartige aktive Polyole sind an sich bekannt.
3. Als Treibmittel werden Wasser (bevorzugt) und/ oder leicht flüchtige organische Substanzen verwendet.
4. Erfindungsgemäß werden die aus der Polyurethanchemie an sich bekannten Katalysatoren wie tert.-Amine und/oder metallorganische Verbindungen eingesetzt.
5. Als Flammschutzmittel wird Melamin in einer Korngröße von 5-90 µm, insbesondere von 5-50 µm verwendet. Vorzugsweise wird Melamin in einer Menge von 15 bis 100 Gew.-Teilen, vorzugsweise 15 bis 50 Gew.-Teilen, bezogen auf 100 Gew.-Teile der Komponente 2), eingesetzt.
6. Als weitere Flammschutzmittel werden erfindungsgemäß Phosphonsäureester der allgemeinen Formel (I), (II) und/oder (III), vorzugsweise Dimethyl-methyl-, ethyl- oder phenylphosphonat verwendet. Als Beispiele seien genannt:
   Dimethyl-methylphosphonat,
   Dimethyl-ethylphosphonat,
   Dimethyl-vinylphosphonat,
   Dimethyl-phenylphosphonat,
   Dimethyl-allylphosphonat,
   Ethylen-bis(dimethylphosphonat),
   Poly(ethylen-methylphosphonat) (MG 450),
7. Ausgangskomponenten sind ferner gegebenenfalls Verbindungen mit mindestens zwei gegenüber Isocyanaten reaktionsfähigen Wasserstoffatomen mit einem Molekulargewicht von 32 bis 399. Auch in diesem Fall versteht man hierunter Hydroxylgruppen und/ oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf, Beispiele hierfür werden in der DE-OS 2 832 253, Seiten 19 -20, beschrieben.
8. Gegebenenfalls mitzuverwenden sind auch oberflächenaktive Zusatzstoffe, wie Emulgatoren und Schaumstabilisatoren. Als Emulgatoren sind solche auf Basis alkoxilierter Fettsäuren und höherer Alkohole bevorzugt.
   Als Schaumstabilisatoren kommen vor allem Polyethersiloxane, speziell wasserunlösliche Vertreter, infrage. Diese Verbindungen sind im allgemeinen so aufgebaut, daß ein Copolymerisat aus Ethylenoxid und Propylenoxid mit einem Polydimethylsiloxanrest verbunden ist. Wasserlösliche Schaumstabilisatoren sind z.B. in den US-PS 2 834 748, 2 917 480 und 3 629 308 beschrieben; sie sind zur Herstellung von hochelastischen (HR) Schaumstoffen jedoch nicht so geeignet.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können mitverwendet werden.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966. z.B. auf den Seiten 103 bis 113 beschrieben.

### Durchführung des erfindungsgemäßen Verfahrens:

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-PS 2 764 565 beschrieben werden, Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z.B. Aluminium, oder Kunststoff, z.B. Epoxidharz, infrage. In der Form schäumt das schaumfähige Reaktionsgemisch auf und bildet den Formkörper. Die Formverschäumung kann dabei so durchgeführt werden, daß das Formteil an seiner Oberfläche Zellstruktur aufweist. Sie kann aber auch so durchgeführt werden, daß das Formteil eine kompakte Haut und einen zelligen Kern aufweist. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt, Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "over-charging" gearbeitet; eine derartige Verfahrensweise ist z.B. aus den US-PS 3 178 490 und 3 182 104 bekannt.

Bei der Formverschäumung werden vielfach an sich bekannte "äußere Trennmittel", wie Siliconöle, mitverwendet. Mann kann aber auch sogenannte "innere Trennmittel", gegebenenfalls im Gemisch mit äußeren Trennmitteln, verwenden, wie sie z.B. aus den DE-OS 2 121 670 und 2 307 589 bekannt geworden sind.

Selbstverständlich können aber auch Schaumstoffe durch Blockverschäumung oder nach dem an sich bekannten Doppeltransportbandverfahren hergestellt werden.

Die Entzündungsversuche unter den starken Anforderungen des Crib 5-Testes nach BS 5852, Part 2, zeigen, daß die erfindungsgemäßen Verbindungen als Flammschutzmittel hervorragend geeignet sind. Vorteilhaft sind auch die mechanischen Eigenschaften der resultierenden Schaumstoffe.

Die flammwidrigen Polyurethanschaumstoffe werden zur Konfektionierung von Möbeln und zur Herstellung von Matratzen mit erhöhten Flammschutznormen und Sicherheitsbestimmungen, z.B. gemäß BS 5852, Part 2 und den dort aufgeführten Entzündungsquellen, verwendet.

Erfindungsgemäß können Schaumstoffe mit niedriger Rohdichte bis z.B. 22 kg/m³ erhalten werden, die dennoch die genannten Flammschutzanforderungen erfüllen.

Anwendung finden diese flammwidrigen Schaumstoffe zur Ausrüstung von Sitzmöbeln in Theatern, Kinos, im Privatbereich und Gaststätten sowie zur Ausrüstung von Liegemöbeln.

Die Schaumstoffe können nach verschiedenen Verfahren der Blockschaumstoffherstellung oder aber in Formen hergestellt werden.

### Beispiel 1

100 Tle. einer Dispersion eines Polyharnstoffs aus Hydrazin und Toluylendiisocyanat in einem aktiven Polyetherpolyol aus Trimethylolpropan, Propylenoxid und Ethylenoxid, OH-Zahl 32
4,3 Tle. Wasser
0,4 Tle. Stabilisator AC 3367 der Bayer AG auf der Basis eines kurzkettig polyethermodifizierten Silicons
0,1 Tle. Aktivator Dabco® 33LV (Houdry Hüls) Lösung von Triethylendiamin in DPG
0,05 Tle. Aktivator A1 (UCC) (Bis-(2-dimethylaminoethyl)-ether)
1,5 Tle. Diethanolamin
1,32 Tle. Vernetzer PU 3229 der Bayer AG, Aminvernetzer auf der Basis eines höheren Alkanolamins
0,15 Tle. Zinn-2-ethyl-hexoat
5,0 Tle. Dimethyl-methylphosphonat
35,0 Tle. Melamin der Korngröße 10 µm
6,0 Tle. Monofluortrichlormethan
56,8 Tle. Toluylendiisocyanat (TDI) (80 Gew.-% 2,4- und 20 Gew.-% 2,6-Isomeres)

| | |
|---|---|
| Startzeit des Reaktionsgemisches: | 8 sec |
| Rohdichte des Schaumstoffs: | 22 kg m⁻³ |

Der Schaumstoff wird mit einem Luftwiderstand von 50 mm Wassersäule (Vordruck 2 bar) nach dem Test gemäß BS 5852, Ignition Source 5, geprüft

| | |
|---|---|
| Brandzeit: | 220 Sekunden |
| Masseverlust: | 58 g |

Consumer Protextion Nr. 1324 (GB 1988) bestanden.

### Beispiel 2

100 Tle. Polyharnstoffdispersion gemäß Beispiel 1
4,3 Tle. Wasser
0,4 Tle. Stabilisator AC 3367 gemäß Beispiel 1
0,1 Tle. Aktivator Dabco® 33LV gemäß Beispiel 1
0,05 Tle. Aktivator A1 gemäß Beispiel 1
1,5 Tle. Diethanolamin
1,32 Tle. Vernetzer PU 3229 gemäß Beispiel 1
0,15 Tle. Zinn-2-ethyl-hexoat
35,0 Tle. Melamin der Korngröße 10 µm
8,0 Tle. Dimethyl-methylphosphonat
6,0 Tle. Monofluortrichlormethan
56,8 Tle. Polyisocyanat gemäß Beispiel 1

| | |
|---|---|
| Startzeit des Reaktionsgemisches: | 7 sec |
| Rohdichte des Schaumstoffs: | 22,5 kg m⁻³ |

Der Schaumstoff wird mit einem Luftwiderstand von 50 mm Wassersäule geprüft (vgl. Beispiel 1), wobei gemäß BS 5852, Ign. Source 5 resultiert

| | |
|---|---|
| Brandzeit: | 280 Sekunden |
| Masseverlust: | 52 g |

Consumer Prot. Nr. 1324/1988 (GB) bestanden.

### Beispiel 3 (Vergleichsversuch)

100 Tle. Polyharnstoffdispersion gemäß Beispiel 1
4,3 Tle. Wasser
0,4 Tle. Stabilisator AC 3367 gemäß Beispiel 1
0,1 Tle. Aktivator Dabco® 33LV gemäß Beispiel 1
0,05 Tle. Aktivator A1 gemäß Beispiel 1
1,5 Tle. Diethanolamin
1,32 Tle. Vernetzer PU 3229 gemäß Beispiel 1
0,15 Tle. Zinnhexoat
2,0 Tle. Tetrakis-(2-chlorethyl)-ethylendiphosphat
6,0 Tle. Monofluortrichlormethan
35,0 Tle. Melamin der Korngröße 100 µm bis 150 µm
56,8 Tle. Polyisocyanat gemäß Beispiel 1

| | |
|---|---|
| Rohdichte: | 22,5 kg m⁻³ |

Der Schaumstoff wird mit einem Luftwiderstand von 50 mm Wassersäule geprüft (vgl. Beispiel 1), wobei gemäß BS 5852, Ign. Source 5 resultiert

| | |
|---|---|
| Brandzeit: | nach 300 sec. wurde gelöscht |
| Masseverlust: | ca. 180 g |

Consumer Prot. Nr. 1324/1988 (GB) nicht bestanden.

### Beispiel 4

100 Tle. Polyharnstoffdispersion gemäß Beispiel 1
4,3 Tle. Wasser
0,4 Tle. Stabilisator AC 3367 gemäß Beispiel 1
0,1 Tle. Aktivator Dabco® 33LV gemäß Beispiel 1
0,05 Tle. Aktivator gemäß Beispiel 1
1,5 Tle. Diethanolamin
1,32 Tle. Vernetzer PU 3229 gemäß Beispiel 1
0,15 Tle. Zinn-2-ethyl-hexoat
35,0 Tle. Melamin der Korngröße 10 µm
8,0 Tle. Dimethyl-vinylphosphonat
6,0 Tle. Monofluortrichlormethan
56,8 Tle. Polyisocyanat gemäß Beispiel 1

| | |
|---|---|
| Startzeit des Reaktionsgemisches: | 7 sec |
| Rohdichte des Schaumstoffs: | 23 kg m⁻³ |

Der Schaumstoff wird mit einem Luftwiderstand von 50 mm Wassersäule geprüft (vgl. Beispiel 1), wobei gemäß BS 5852, Ign. Source 5 resultiert

| | |
|---|---|
| Brandzeit: | 280 Sekunden |
| Masseverlust: | 49 g |

Consumer Prot. Nr. 1324/1988 (GB) bestanden.

### Beispiel 5

100 Tle. Polyharnstoffdispersion gemäß Beispiel 1
4,3 Tle. Wasser
0,4 Tle. Stabilisator AC 3367 gemäß Beispiel 1
0,1 Tle. Aktivator Dabco® 33LV gemäß Beispiel 1
0,05 Tle. Aktivator gemäß Beispiel 1
1,5 Tle. Diethanolamin
1,32 Tle. Vernetzer PU 3229 gemäß Beispiel 1
0,15 Tle. Zinn-2-ethyl-hexoat
35,0 Tle. Melamin der Korngröße 10 µm
8,0 Tle. Dimethylallylphosphonat
6,0 Tle. Monofluortrichlormethan
56,8 Tle. Polyisocyanat gemäß Beispiel 1

| | |
|---|---|
| Startzeit des Reaktionsgemisches: | 7 sec |
| Rohdichte des Schaumstoffs: | 22,9 kg m⁻³ |

Der Schaumstoff wird mit einem Luftwiderstand von 50 mm Wasssrsäule geprüft (vgl. Beispiel 1), wobei gemäß BS 5852, Ign. Source 5 resultiert

| | |
|---|---|
| Brandzeit: | 281 Sekunden |
| Masseverlust: | 51 g |

Consumer Prot. Nr. 1324/1988 (GB) bestanden.

### Beispiel 6 (Vergleichsbeispiel)

100 Tle. Polyharnstoffdispersion gemäß Beispiel 1
4,3 Tle. Wasser
0,4 Tle. Stabilisator AC 3367 gemäß Beispiel 1
0,1 Tle. Aktivator Dabco® 33LV gemäß Beispiel 1
0,05 Tle. Aktivator A1 gemäß Beispiel 1
1,5 Tle. Diethanolamin
1,32 Tle. Vernetzer PU 3229 gemäß Beispiel 1
0,15 Tle. Zinn-2-ethyl-hexoat
2,0 Tle. Dimethyl-methylphosphonat
6,0 Tle. Monofluortrichlormethan
35,0 Tle. Melamin der Korngröße 100 bis 150 µm
56,8 Tle. Toluylendiisocyanat gemäß Beispiel 1

| | |
|---|---|
| Rohdichte: | 22,9 kg/m³ |

Der Schaumstoff wird mit einem Luftwiderstand von 50 mm Wassersäule geprüft (vgl. Beispiel 1), wobei gemäß BS 5852, Ignition Source 5, resultiert;

| | |
|---|---|
| Brandzeit: | Erlöschen nach 300 sec |
| Masseverlust: | ca. 120 g |

Consumer Prot. Nr. 1324/1988 (GB) nicht bestanden.

Aus den Beispielen 1 und 2 geht hervor, daß die offenzellig gemachten Schaumstoffe die Consumer Protection Nr. 1324 (GB 1988) erfüllen.

Die Ergebnisse von 1 und 2 sind auch insofern überraschend, da es durch die Kombination von Melamin mit Phosphonaten gelingt, mit relativ geringen Zusatzmengen einen Flammschutz zu erreichen, der hohen Anforderungen genügt.

## Patentansprüche

1. Verfahren zur Herstellung von Polyurethanschaumstoffen durch Ümsetzung von 1) Polyisocyanaten mit 2) mindestens zwei gegenüber Isocyanaten aktive Wasserstoffatome aufweisenden Verbindungen vom Molekulargewicht 400 bis 10.000 in Gegenwart von 3) Wasser und/oder organischen Treibmitteln, 4) Katalysatoren, 5) Melamin als Flammschutzmittel und 6) weiteren Flammschutzmitteln und gegebenenfalls in Gegenwart von 7) Verbindungen mit mindestens zwei gegenüber Isocyanaten reaktionsfähigen Wasserstoffatomen und einem Molekulargewicht von 32 bis 399 sowie 8) an sich bekannten oberflächenaktiven Zusatzstoffen und weiteren, an sich bekannten Hilfsmitteln, dadurch gekennzeichnet, daß als weitere Flammschutzmittel 6) Phosphonsäureester der allgemeinen Formeln 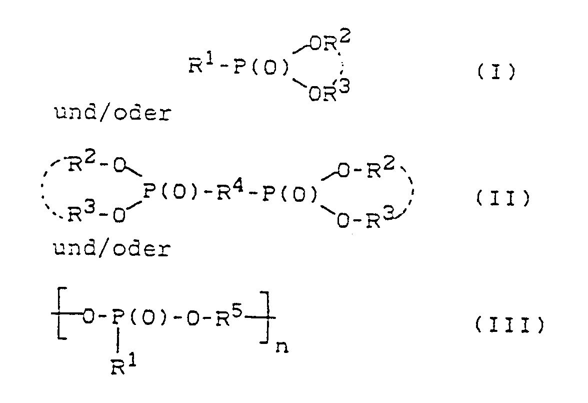 in denen
R¹, R² und R³ gleich oder verschieden sind und einen gesättigten oder ungesättigten C₁-C₆-Alkylrest, einen C₅-C₁₂-Cycloalkylrest, einen C₇-C₁₅-Aralkylrest oder einen C₆-C₁₂-Arylrest, wobei R² und R³ zusammen eine C₂-C₄-Alkylengruppe darstellen können
R₄ eine C₁-C₆-Alkylengruppe, C₅-C₁₂-Cycloalkylengruppe, C₇-C₁₅-Aralkylengruppe oder eine C₆-C₁₂-Arylengruppe,
C₅ eine C₂-C₆-Alkylengruppe, C₅-C₁₂-Cycloalkylengruppe, C₇-C₁₅-Aralkylengruppe oder eine C₆-C₁₂-Arylengruppe
und
n eine ganze Zahl von 1 bis 100
bedeuten, und
Melamin 5) mit einer Korngröße von 5-90 µm; vorzugsweise 5-50 µm, verwendet wird.

2. Verfahren gemäß Anspruch 1, dadurch gekennzeichnet, daß als Komponente 2) polymermodifizierte Polyole und/oder Polyole mit überwiegend primären Hydroxylgruppen verwendet werden.

3. Verfahren nach Anspruch 1 und 2, dadurch gekennzeichnet, daß als polymermodifizierte Polyole Polyharnstoffdispersionen in Polyether-polyolen verwendet werden. werden.

4. Verfahren nach Anspruch 1 und 2, dadurch gekennzeichnet, daß als polymermodifizierte Polyole Alkanolaminaddukte von Diisocyanaten in Polyether-polyolen verwendet werden.

5. Verfahren nach Anspruch 1 und 2, dadurch gekennzeichnet, daß als polynermodifizierte Polyole gepfropfte Polyether-polyole, die durch Polymerisation von Acrylnitril und/oder Styrol in Polyether-polyolen enthalten wurden, verwendet werden.

6. Verfahren nach Anspruch 1 bis 5, dadurch gekennzeichnet, daß als weiteres Flammschutzmittel 6) Dimethylmethylphosphonat verwendet wird.

7. Verfahren gemäß Anspruch 1-5, dadurch gekennzeichnet, daß als weiteres Flammschutzmittel 6) Dimethylethylphosphonat verwendet wird.

8. Verfahren gemäß Anspruch 1-5, dadurch gekennzeichnet, daß als weiteres Flammschutzmittel 6) Dimethylphenylphosphonat verwendet wird.

## Claims

1. A process for the production of polyurethane foams by reaction of 1) polyisocyanates with 2) compounds containing at least two isocyanate-reactive hydrogen atoms and having a molecular weight of 400 to 10,000 in the presence of 3) water and/or organic blowing agents, 4) catalysts, 5) melamine as flameproofing agent and 6) other flameproofing agents and optionally in the presence of 7) compounds containing at least two isocyanate-reactive hydrogen atoms and having a molecular weight of 32 to 399 and 8) surface-active additives known per se and other auxiliaries known per se, characterized in that the other flameproofing agents 6) are phosphonic acid esters corresponding to the following general formulae: 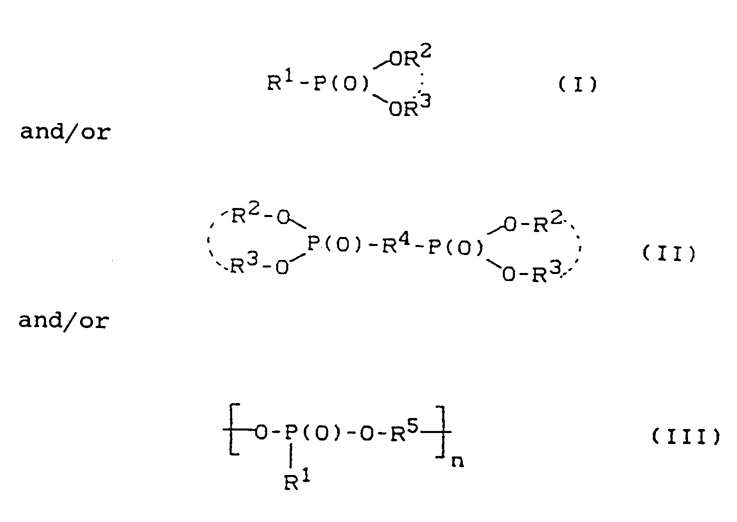 in which
R¹, R² and R³ may be the same or different and represent a saturated or unsaturated C₁₋₆ alkyl radical, a C₅₋₁₂ cycloalkyl radical, a C₇₋₁₅ aralkyl radical or a C₆₋₁₂ aryl radical; R² and R³ together may represent a C₂₋₄ alkylene group
R⁴ is a C₁₋₆ alkylene group, a C₅₋₁₂ cycloalkylene group, a C₇₋₁₅ aralkylene group or a C₆₋₁₂ arylene group,
R⁵ is a C₂₋₆ alkylene group, a C₅₋₁₂ cycloalkylene group, a C₇₋₁₅ aralkylene group or a C₆₋₁₂ arylene group
and
n is an integer of 1 to 100,
and melamine 5) with a particle size of 5 to 90 µm and preferably 5 to 50 µm.

2. A process as claimed in claim 1, characterized in that polymer-modified polyols and/or polyols predominantly containing primary hydroxyl groups are used as component 2).

3. A process as claimed in claims 1 and 2, characterized in that polyurea dispersions in polyether polyols are used as the polymer-modified polyols.

4. A process as claimed in claims 1 and 2, characterized in that alkanolamine adducts of diisocyanates in polyether polyols are used as the polymer-modified polyols.

5. A process as claimed in claims 1 and 2, characterized in that grafted polyether polyols obtained by polymerization of acrylonitrile and/or styrene in polyether polyols are used as the polymer-modified polyols.

6. A process as claimed in claims 1 to 5, characterized in that dimethyl methyl phosphonate is used as the other flameproofing agent 6).

7. A process as claimed in claims 1 to 5, characterized in that dimethyl ethyl phosphonate is used as the other flameproofing agent 6).

8. A process as claimed in claims 1 to 5, characterized in that dimethyl phenyl phosphonate is used as the other flameproofing agent 6).

## Revendications

1. Procédé de préparation de mousses de polyuréthannes par réaction de 1) des polyisocyanates avec 2) des composés contenant au moins 2 atomes d'hydrogène actifs avec les isocyanates, de poids moléculaire 400 à 10 000, en présence de 3) de l'eau et/ou des agents porogènes organiques, 4) des catalyseurs, 5) la mélamine servant d'agent ignifugeant et 6) d'autres agents ignifugeants et le cas échéant en présence de 7) des composés contenant au moins 2 atomes d'hydrogène réactifs avec les isocyanates et ayant un poids moléculaire de 32 à 399 et 8) des additifs tensioactifs connus en soi et d'autres produits auxiliaires connus en soi, caractérisé en ce que l'on utilise en tant qu'autres agents ignifugeants 6) des esters phosphoniques de formules générales 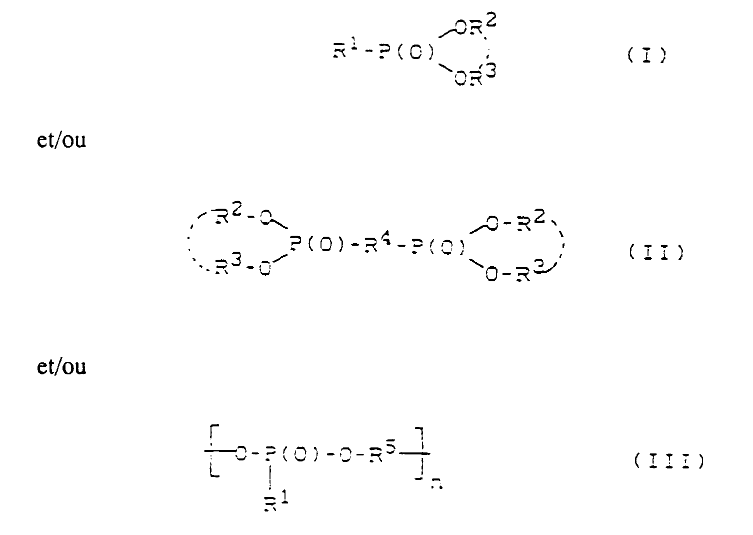 dans lesquelles
R¹, R² et R³, ayant des significations identiques ou différentes, représentent chacun un groupe alkyle saturé ou insaturé en C₁-C₆, un groupe cycloalkyle en C₅-C₁₂, un groupe aralkyle en C₇-C₁₅ ou un groupe aryle en C₆-C₁₂, R² et R³ pouvant également représenter ensemble un groupe alkylène en C₂-C₄,
R⁴ représente un groupe alkylène en C₁-C₆, cycloalkylène en C₅-C₁₂, aralkylène en C₇-C₁₅ ou arylène en C₆-C₁₂,
R⁵ représente un groupe alkylène en C₂-C₆, cycloalkylène en C₅-C₁₂, aralkylène en C₇-C₁₅ ou arylène en C₆-C₁₂,
et
n est un nombre entier allant de 1 à 100,
et on utilise une mélamine 5) à une dimension de grain de 5 à 90 µm, plus spécialement de 5 à 50 µm.

2. Procédé selon la revendication 1, caractérisé en ce que l'on utilise en tant que composants 2) des polyols modifiés par des polymères et/ou des polyols à groupes hydroxy principalement primaires.

3. Procédé selon les revendications 1 et 2, caractérisé en ce que l'on utilise en tant que polyols modifiés par des polymères des dispersions de polyurées dans des polyéther-polyols.

4. Procédé selon les revendications 1 et 2, caractérisé en ce que l'on utilise en tant que polyols modifiés par des polymères des adducts d'alcanolamines et de diisocyanates dans des polyéther-polyols.

5. Procédé selon les revendications 1 et 2, caractérisé en ce que l'on utilise en tant que polyols modifiés par des polymères des polyéther-polyols greffés obtenus par polymérisation de l'acrylonitrile et/ou du styrène dans des polyéther-polyols.

6. Procédé selon les revendications 1 à 5, caractérisé en ce que l'on utilise en tant qu'autre agent ignifugeant 6) du méthylphosphonate de diméthyle.

7. Procédé selon les revendications 1 à 5, caractérisé en ce que l'on utilise en tant qu'autre agent ignifugeant 6) de l'éthylphosphonate de diméthyle.

8. Procédé selon les revendications 1 à 5, caractérisé en ce que l'on utilise en tant qu'autre agent ignifugeant 6) du phénylphosphonate de diméthyle.
